# EUROPEAN PATENT APPLICATION

(11) **EP 4 622 039 A1**
(43) Date of publication of application: **24.09.2025**
(21) Application number: 23909415.4
(22) Date of filing: 26.09.2023
(51) Int. Cl.: H02J 3/38, H02J 3/28, H02J 3/14, H02J 3/00

(54) **GRID-CONNECTED AND OFF-GRID SWITCHING APPARATUS ON ALTERNATING-CURRENT SIDE OF THREE-PHASE ENERGY STORAGE INVERTER**

(30) Priority: 26.12.2022 CN 202211672015
(71) Applicant: Sineng Electric Co., Ltd., Wuxi, Jiangsu 214174 (CN)
(72) Inventor: MA, Jie, Wuxi, Jiangsu 214174 (CN); JIN, Wuqing, Wuxi, Jiangsu 214174 (CN); WANG, Jiayi, Wuxi, Jiangsu 214174 (CN); TIAN, Lixin, Wuxi, Jiangsu 214174 (CN); XIAO, Liujie, Wuxi, Jiangsu 214174 (CN)
(74) Representative: Bayramoglu et al.
(86) International application number: PCT/CN2023/121734
(87) International publication number: WO 2024/139480

(57) **Abstract**

This application discloses a grid-connected and off-grid switching apparatus on an alternating-current side of a three-phase energy storage inverter. According to the apparatus, a first relay set, a second relay set, a third relay set, a fourth relay set, and a fifth relay set are introduced between an inverter circuit, a power grid, a load, and an earth wire, and there is a specific connection manner between the relay sets, so that the three-phase energy storage inverter can safely and stably operate in a plurality of different grid-connected and off-grid modes, and a connection between the three-phase energy storage inverter and the power grid or the load can be flexibly cut off. Therefore, a grid-connected operating mode and an off-grid operating mode of the three-phase energy storage inverter are independent of each other. In addition, a relay set is added before grid-connection to isolate and protect the circuit in the three-phase energy storage inverter from the power grid. In addition, a relay set is introduced from a neutral wire and is connected to the earth wire, so that the neutral wire is separated from a protection wire, thereby greatly improving system safety.

## Description

This application claims priority to Chinese Patent Application No. 202211672015.3, filed with the China National Intellectual Property Administration on December 26, 2022, and entitled "GRID-CONNECTED AND OFF-GRID SWITCHING APPARATUS ON ALTERNATING-CURRENT SIDE OF THREE-PHASE ENERGY STORAGE INVERTER", which is incorporated herein by reference in its entirety.

### TECHNICAL FIELD

This application relates to the field of inverter circuit technologies, and in particular, to a grid-connected and off-grid switching apparatus on an alternating-current side of a three-phase energy storage inverter.

### BACKGROUND

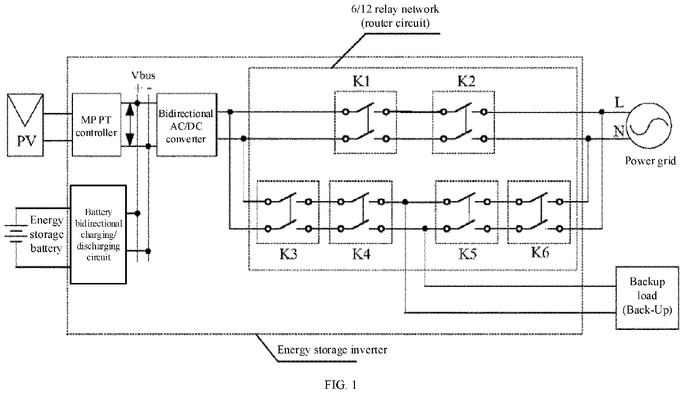

In an existing photovoltaic energy storage inverter, for a routing relay circuit, a 6/12 relay network shown in FIG. 1 is mainly used to form a photovoltaic energy storage inverter system. In this case, a quantity of relays is large, which is not conducive to integration of a high-power-density energy storage inverter. The routing relay circuit including a plurality of relays has poor reliability and high costs, resulting in low cost-effectiveness of the energy storage inverter.

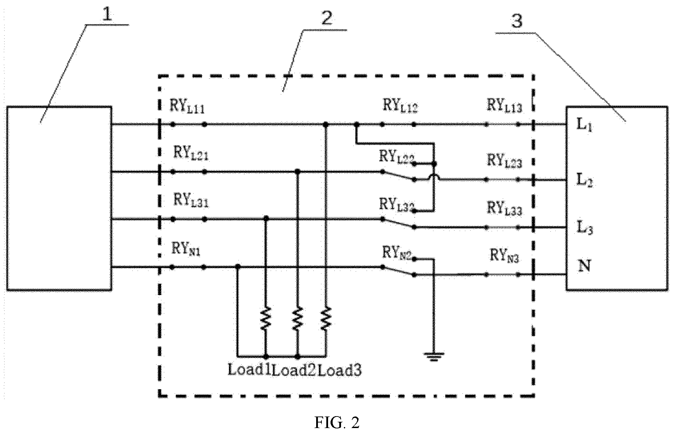

An existing solution extends from a grid-side routing relay circuit of a single-phase energy storage inverter to a grid-side routing relay circuit of a three-phase energy storage inverter. As shown in FIG. 2, 1, 2, and 3 in FIG. 2 are respectively a multi-energy system, relays, and a power grid, thereby greatly reducing a quantity of energy storage inverters, reducing costs, and improving power density. However, the grid-side routing relay circuit of a three-phase energy storage inverter that is derived from the grid-side routing relay circuit of a single-phase energy storage inverter is simple but lacks a reliably grounded relay switch, posing an electrical shock safety risk, and failing to account for system instability during operating of a power system with an asymmetric three-phase load.

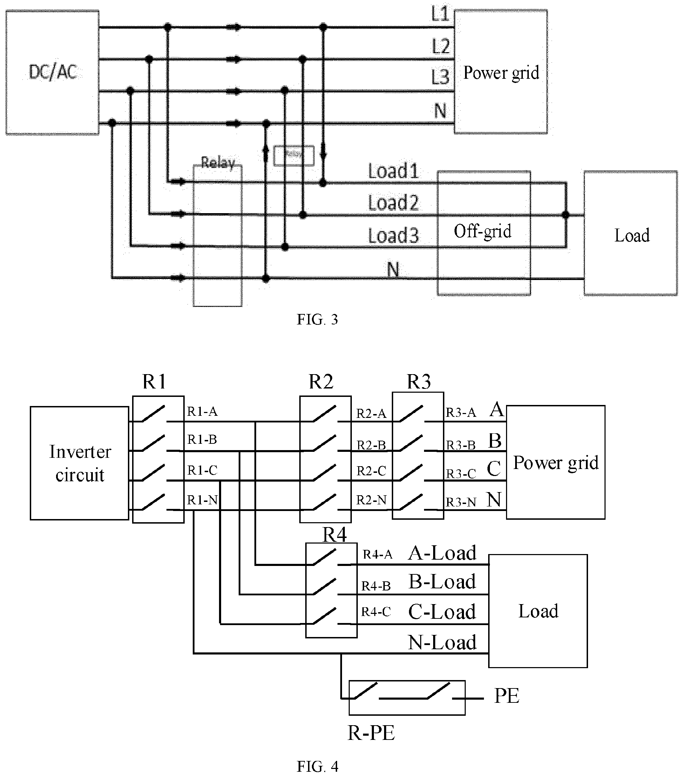

In an existing method for improving an on-load capability of a three-phase energy storage inverter system, as shown in FIG. 3, a load needs to be connected after two or three live wires are short-circuited at an off-grid terminal. When there is a power grid, a grid-side inverter and bypass relays of one phase corresponding to any of the short-circuited live wires are turned on. In an off-grid case in which there is no power grid, an off-grid relay is turned on and a corresponding inverter power module is controlled based on phases of the short-circuited live wires to perform equal current output. However, for the method for improving an on-load capability of a three-phase energy storage inverter system, one bypass relay set needs to be added, and the live wires at the off-grid terminal need to be short-circuited. A method for controlling the bypass relays is relatively complex, and the inverter power module needs to perform equal current output, resulting in more complicated power control and large system disturbance during operating.

### SUMMARY

This application aims to resolve at least one of the foregoing technical problems. To resolve the foregoing technical problems, this application discloses a grid-connected and off-grid switching apparatus on an alternating-current side of a three-phase energy storage inverter. The apparatus includes a first relay set, a second relay set, a third relay set, a fourth relay set, and a fifth relay set.

A first A-phase terminal, a first B-phase terminal, a first C-phase terminal, and a first neutral terminal of the first relay set are respectively configured to be connected to an A-phase terminal, a B-phase terminal, a C-phase terminal, and a neutral terminal of an inverter circuit.

A second A-phase terminal, a second B-phase terminal, a second C-phase terminal, and a second neutral terminal of the first relay set are respectively connected to a first A-phase terminal, a first B-phase terminal, a first C-phase terminal, and a first neutral terminal of the second relay set.

A second A-phase terminal, a second B-phase terminal, a second C-phase terminal, and a second neutral terminal of the second relay set are respectively connected to a first A-phase terminal, a first B-phase terminal, a first C-phase terminal, and a first neutral terminal of the third relay set.

A second A-phase terminal, a second B-phase terminal, a second C-phase terminal, and a second neutral terminal of the third relay set are respectively configured to be connected to an A-phase terminal, a B-phase terminal, a C-phase terminal, and a neutral terminal of a power grid.

The second A-phase terminal, the second B-phase terminal, and the second C-phase terminal of the first relay set are further respectively connected to a first A-phase terminal, a first B-phase terminal, and a first C-phase terminal of the fourth relay set, and a second A-phase terminal, a second B-phase terminal, and a second C-phase terminal of the fourth relay set are respectively configured to be connected to an A-phase terminal, a B-phase terminal, and a C-phase terminal of a load.

The second neutral terminal of the first relay set is further connected to a first terminal of the fifth relay set, a second terminal of the fifth relay set serves as a PE terminal, and the second neutral terminal of the first relay set is further connected to a neutral terminal of the load.

In an optional embodiment, the first relay set includes a first relay, a second relay, a third relay, and a fourth relay, first terminals of the first relay, the second relay, the third relay, and the fourth relay are respectively the first A-phase terminal, the first B-phase terminal, the first C-phase terminal, and the first neutral terminal of the first relay set, and second terminals of the first relay, the second relay, the third relay, and the fourth relay are respectively the second A-phase terminal, the second B-phase terminal, the second C-phase terminal, and the second neutral terminal of the first relay set.

In an optional embodiment, the second relay set includes a fifth relay, a sixth relay, a seventh relay, and an eighth relay, first terminals of the fifth relay, the sixth relay, the seventh relay, and the eighth relay are respectively the first A-phase terminal, the first B-phase terminal, the first C-phase terminal, and the first neutral terminal of the second relay set, and second terminals of the fifth relay, the sixth relay, the seventh relay, and the eighth relay are respectively the second A-phase terminal, the second B-phase terminal, the second C-phase terminal, and the second neutral terminal of the second relay set.

In an optional embodiment, the third relay set includes a ninth relay, a tenth relay, an eleventh relay, and a twelfth relay, first terminals of the ninth relay, the tenth relay, the eleventh relay, and the twelfth relay are respectively the first A-phase terminal, the first B-phase terminal, the first C-phase terminal, and the first neutral terminal of the third relay set, and second terminals of the ninth relay, the tenth relay, the eleventh relay, and the twelfth relay are respectively the second A-phase terminal, the second B-phase terminal, the second C-phase terminal, and the second neutral terminal of the third relay set.

In an optional embodiment, the fourth relay set includes a thirteenth relay, a fourteenth relay, and a fifteenth relay, first terminals of the thirteenth relay, the fourteenth relay, and the fifteenth relay are respectively the first A-phase terminal, the first B-phase terminal, and the first C-phase terminal of the fourth relay set, and second terminals of the thirteenth relay, the fourteenth relay, and the fifteenth relay are respectively the second A-phase terminal, the second B-phase terminal, and the second C-phase terminal of the fourth relay set.

In an optional embodiment, the fifth relay set includes a sixteenth relay and a seventeenth relay, a first terminal of the sixteenth relay is the first terminal of the fifth relay set, a second terminal of the sixteenth relay is connected to a first terminal of the seventeenth relay, and a second terminal of the seventeenth relay is the second terminal of the fifth relay set.

In an optional embodiment, when the apparatus is in a pure grid-connected mode, the relays in the first relay set, the second relay set, and the third relay set are all turned on, and the relays in the fourth relay set and the fifth relay set are all turned off.

In an optional embodiment, when the apparatus is in a grid-connected and on-load operating mode, the relays in the first relay set, the second relay set, the third relay set, the fourth relay set, and the fifth relay set are all turned on.

In an optional embodiment, when the apparatus is in a pure off-grid mode, the relays in the first relay set are all turned off, and the relays in the second relay set, the third relay set, the fourth relay set, and the fifth relay set are all turned on.

In the embodiments of this application, the first relay set, the second relay set, the third relay set, the fourth relay set, and the fifth relay set are introduced between the inverter circuit, the power grid, the load, and an earth wire, and there is a specific connection manner between the relay sets, so that the three-phase energy storage inverter can safely and stably operate in a plurality of different grid-connected and off-grid modes, and a connection between the three-phase energy storage inverter and the power grid or the load can be flexibly cut off. Therefore, a grid-connected operating mode and an off-grid operating mode of the three-phase energy storage inverter are independent of each other. In addition, a relay set is added before grid-connection to isolate and protect the circuit in the three-phase energy storage inverter from the power grid. In addition, a relay set is introduced from a neutral wire and is connected to the earth wire, so that the neutral wire is separated from a protection wire, thereby greatly improving system safety.

### BRIEF DESCRIPTION OF THE DRAWINGS

FIG. 1 is a schematic circuit diagram of a photovoltaic energy storage inverter system formed by a 6/12 relay network according to the conventional technology;
FIG. 2 is a schematic diagram of a grid-side routing relay circuit of a three-phase energy storage inverter that is derived from a grid-side routing relay circuit of a single-phase energy storage inverter according to the conventional technology;
FIG. 3 is a schematic circuit diagram of a relay solution for improving an on-load capability of a three-phase energy storage inverter system according to the conventional technology;
FIG. 4 is a schematic circuit diagram of a grid-connected and off-grid switching apparatus on an alternating-current side of a three-phase energy storage inverter according to an embodiment of this application;
FIG. 5 is a schematic circuit diagram of a grid-connected and off-grid switching apparatus on an alternating-current side of a three-phase energy storage inverter in a pure grid-connected mode according to an embodiment of this application;
FIG. 6 is a schematic circuit diagram of a grid-connected and off-grid switching apparatus on an alternating-current side of a three-phase energy storage inverter in a grid-connected and on-load operating mode according to an embodiment of this application;
FIG. 7 is a schematic circuit diagram of a grid-connected and off-grid switching apparatus on an alternating-current side of a three-phase energy storage inverter in a pure off-grid mode according to an embodiment of this application; and
FIG. 8 is a flowchart of a control policy of a grid-connected and off-grid switching apparatus on an alternating-current side of a three-phase energy storage inverter according to an embodiment of this application.

### DETAILED DESCRIPTION OF THE EMBODIMENTS

To make a person skilled in the art better understand the solutions in this application, the following clearly and completely describes the technical solutions in the embodiments of this application with reference to the accompanying drawings in the embodiments of this application. Clearly, the described embodiments are merely some rather than all of the embodiments of this application. All other embodiments obtained by a person of ordinary skill in the art based on the embodiments of this application without creative efforts shall fall within the protection scope of this application.

It should be understood that the terms "first", "second", and the like in the specification, claims, and accompanying drawings of this application are used to distinguish between different objects, and are not used to describe a specific sequence. In addition, the terms "include" and "have" and any variations thereof are intended to cover a non-exclusive inclusion. For example, a process, method, apparatus, product, or terminal that includes a series of steps or units is not limited to a listed step or unit, but optionally further includes an unlisted step or unit, or optionally further includes another step or unit inherent to the process, method, product, or terminal.

The "embodiment" mentioned in this specification means that a specific feature, structure, or characteristic described with reference to the embodiment may be included in at least one embodiment of this application. That the phrase appears at various positions in the specification does not necessarily refer to a same embodiment, nor is it a separate or alternative embodiment mutually exclusive with another embodiment. A person skilled in the art explicitly and implicitly understands that the embodiments described in the specification may be combined with another embodiment.

This application discloses a grid-connected and off-grid switching apparatus on an alternating-current side of a three-phase energy storage inverter. The apparatus includes a first relay set R1, a second relay set R2, a third relay set R3, a fourth relay set R4, and a fifth relay set R-PE. A first A-phase terminal, a first B-phase terminal, a first C-phase terminal, and a first neutral terminal of the first relay set R1 are respectively configured to be connected to an A-phase terminal, a B-phase terminal, a C-phase terminal, and a neutral terminal of an inverter circuit. A second A-phase terminal, a second B-phase terminal, a second C-phase terminal, and a second neutral terminal of the first relay set R1 are respectively connected to a first A-phase terminal, a first B-phase terminal, a first C-phase terminal, and a first neutral terminal of the second relay set R2. A second A-phase terminal, a second B-phase terminal, a second C-phase terminal, and a second neutral terminal of the second relay set R2 are respectively connected to a first A-phase terminal, a first B-phase terminal, a first C-phase terminal, and a first neutral terminal of the third relay set R3. A second A-phase terminal, a second B-phase terminal, a second C-phase terminal, and a second neutral terminal of the third relay set R3 are respectively configured to be connected to an A-phase terminal, a B-phase terminal, a C-phase terminal, and a neutral terminal of a power grid. The second A-phase terminal, the second B-phase terminal, and the second C-phase terminal of the first relay set R1 are further respectively connected to a first A-phase terminal, a first B-phase terminal, and a first C-phase terminal of the fourth relay set R4. A second A-phase terminal, a second B-phase terminal, and a second C-phase terminal of the fourth relay set R4 are respectively configured to be connected to an A-phase terminal, a B-phase terminal, and a C-phase terminal of a load. The second neutral terminal of the first relay set R1 is further connected to a first terminal of the fifth relay set R-PE. A second terminal of the fifth relay set R-PE serves as a PE terminal. The second neutral terminal of the first relay set R1 is further connected to a neutral terminal of the load. The first relay set R1, the second relay set R2, the third relay set R3, the fourth relay set R4, and the fifth relay set R-PE are introduced between the inverter circuit, the power grid, the load, and an earth wire, and there is a specific connection manner between the relay sets, so that the three-phase energy storage inverter can safely and stably operate in a plurality of different grid-connected and off-grid modes, and a connection between the three-phase energy storage inverter and the power grid or the load can be flexibly cut off. Therefore, a grid-connected operating mode and an off-grid operating mode of the three-phase energy storage inverter are independent of each other. In addition, a relay set is added before grid-connection to isolate and protect the circuit in the three-phase energy storage inverter from the power grid. In addition, a relay set is introduced from a neutral wire and is connected to the earth wire, so that the neutral wire is separated from a protection wire, thereby greatly improving system safety. The following provides separate descriptions in detail.

Refer to FIG. 4. FIG. 4 is a schematic circuit diagram of a grid-connected and off-grid switching apparatus on an alternating-current side of a three-phase energy storage inverter according to an embodiment of this application. As shown in FIG. 4, the grid-connected and off-grid switching apparatus on an alternating-current side of a three-phase energy storage inverter includes a first relay set R1, a second relay set R2, a third relay set R3, a fourth relay set R4, and a fifth relay set R-PE.

A first A-phase terminal, a first B-phase terminal, a first C-phase terminal, and a first neutral terminal of the first relay set R1 are respectively configured to be connected to an A-phase terminal, a B-phase terminal, a C-phase terminal, and a neutral terminal of an inverter circuit.

A second A-phase terminal, a second B-phase terminal, a second C-phase terminal, and a second neutral terminal of the first relay set R1 are respectively connected to a first A-phase terminal, a first B-phase terminal, a first C-phase terminal, and a first neutral terminal of the second relay set R2.

A second A-phase terminal, a second B-phase terminal, a second C-phase terminal, and a second neutral terminal of the second relay set R2 are respectively connected to a first A-phase terminal, a first B-phase terminal, a first C-phase terminal, and a first neutral terminal of the third relay set R3.

A second A-phase terminal, a second B-phase terminal, a second C-phase terminal, and a second neutral terminal of the third relay set R3 are respectively configured to be connected to an A-phase terminal, a B-phase terminal, a C-phase terminal, and a neutral terminal of a power grid.

The second A-phase terminal, the second B-phase terminal, and the second C-phase terminal of the first relay set R1 are further respectively connected to a first A-phase terminal, a first B-phase terminal, and a first C-phase terminal of the fourth relay set R4, and a second A-phase terminal, a second B-phase terminal, and a second C-phase terminal of the fourth relay set R4 are respectively configured to be connected to an A-phase terminal, a B-phase terminal, and a C-phase terminal of a load.

The second neutral terminal of the first relay set R1 is further connected to a first terminal of the fifth relay set R-PE, a second terminal of the fifth relay set R-PE serves as a PE terminal, and the second neutral terminal of the first relay set R1 is further connected to a neutral terminal of the load.

In an optional embodiment, the first relay set R1 includes a first relay R1-A, a second relay R1-B, a third relay R1-C, and a fourth relay R1-N, first terminals of the first relay R1-A, the second relay R1-B, the third relay R1-C, and the fourth relay R1-N are respectively the first A-phase terminal, the first B-phase terminal, the first C-phase terminal, and the first neutral terminal of the first relay set R1, and second terminals of the first relay R1-A, the second relay R1-B, the third relay R1-C, and the fourth relay R1-N are respectively the second A-phase terminal, the second B-phase terminal, the second C-phase terminal, and the second neutral terminal of the first relay set R1.

In an optional embodiment, the second relay set R2 includes a fifth relay R2-A, a sixth relay R2-B, a seventh relay R2-C, and an eighth relay R2-N, first terminals of the fifth relay R2-A, the sixth relay R2-B, the seventh relay R2-C, and the eighth relay R2-N are respectively the first A-phase terminal, the first B-phase terminal, the first C-phase terminal, and the first neutral terminal of the second relay set R2, and second terminals of the fifth relay R2-A, the sixth relay R2-B, the seventh relay R2-C, and the eighth relay R2-N are respectively the second A-phase terminal, the second B-phase terminal, the second C-phase terminal, and the second neutral terminal of the second relay set R2.

In an optional embodiment, the third relay set R3 includes a ninth relay R3-A, a tenth relay R3-B, an eleventh relay R3-C, and a twelfth relay R3-N, first terminals of the ninth relay R3-A, the tenth relay R3-B, the eleventh relay R3-C, and the twelfth relay R3-N are respectively the first A-phase terminal, the first B-phase terminal, the first C-phase terminal, and the first neutral terminal of the third relay set R3, and second terminals of the ninth relay R3-A, the tenth relay R3-B, the eleventh relay R3-C, and the twelfth relay R3-N are respectively the second A-phase terminal, the second B-phase terminal, the second C-phase terminal, and the second neutral terminal of the third relay set R3.

In an optional embodiment, the fourth relay set R4 includes a thirteenth relay R4-A, a fourteenth relay R4-B, and a fifteenth relay R4-C, first terminals of the thirteenth relay R4-A, the fourteenth relay R4-B, and the fifteenth relay R4-C are respectively the first A-phase terminal, the first B-phase terminal, and the first C-phase terminal of the fourth relay set R4, and second terminals of the thirteenth relay R4-A, the fourteenth relay R4-B, and the fifteenth relay R4-C are respectively the second A-phase terminal, the second B-phase terminal, and the second C-phase terminal of the fourth relay set R4.

In an optional embodiment, the fifth relay set R-PE includes a sixteenth relay and a seventeenth relay, a first terminal of the sixteenth relay is the first terminal of the fifth relay set R-PE, a second terminal of the sixteenth relay is connected to a first terminal of the seventeenth relay, and a second terminal of the seventeenth relay is the second terminal of the fifth relay set R-PE.

In an optional embodiment, when the apparatus is in a pure grid-connected mode, the relays in the first relay set R1, the second relay set R2, and the third relay set R3 are all turned on, and the relays in the fourth relay set R4 and the fifth relay set R-PE are all turned off.

In an optional embodiment, when the apparatus is in a grid-connected and on-load operating mode, the relays in the first relay set R1, the second relay set R2, the third relay set R3, the fourth relay set R4, and the fifth relay set R-PE are all turned on.

In an optional embodiment, when the apparatus is in a pure off-grid mode, the relays in the first relay set R1 are all turned off, and the relays in the second relay set R2, the third relay set R3, the fourth relay set R4, and the fifth relay set R-PE are all turned on.

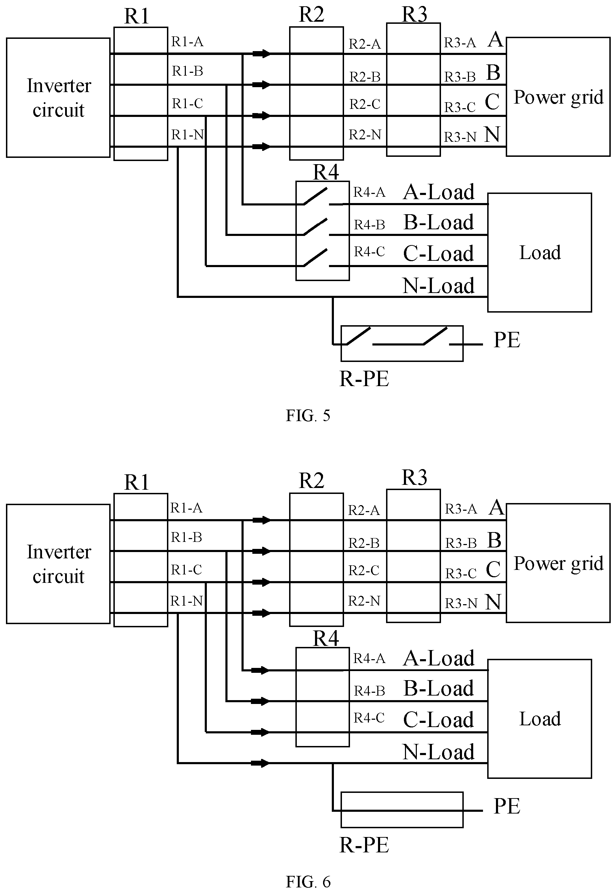

FIG. 5 is a schematic circuit diagram of a grid-connected and off-grid switching apparatus on an alternating-current side of a three-phase energy storage inverter in a pure grid-connected mode according to an embodiment of this application.

FIG. 6 is a schematic circuit diagram of a grid-connected and off-grid switching apparatus on an alternating-current side of a three-phase energy storage inverter in a grid-connected and on-load operating mode according to an embodiment of this application.

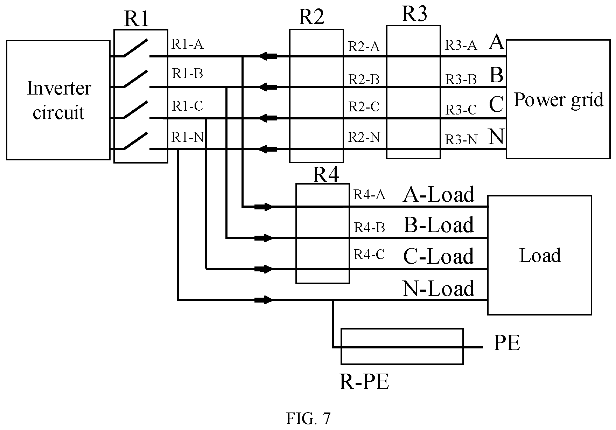

FIG. 7 is a schematic circuit diagram of a grid-connected and off-grid switching apparatus on an alternating-current side of a three-phase energy storage inverter in a pure off-grid mode according to an embodiment of this application.

To facilitate understanding of an operating principle of the grid-connected and off-grid switching apparatus on an alternating-current side of a three-phase energy storage inverter disclosed in this application, the following provides descriptions with reference to FIG. 5, FIG. 6, and FIG. 7.

As shown in FIG. 5, FIG. 6, and FIG. 7, an entire system may mainly include three portions, which are respectively an alternating-current portion of the inverter circuit, a relay control portion (that is, the grid-connected and off-grid switching apparatus on an alternating-current side of a three-phase energy storage inverter disclosed in this application), and a power grid or load portion.

The alternating-current portion of the inverter circuit may include an A-phase wire, a B-phase wire, a C-phase wire, and a neutral wire N passing through the inverter circuit.

The relay control portion includes five relay sets separately controlled. The five relay sets are respectively the first relay set R1, the second relay set R2, the third relay set R3, the fourth relay set R4, and the fifth relay set R-PE. The first relay set R1 includes four relays, which are respectively the first relay R1-A, the second relay R1-B, the third relay R1-C, and the fourth relay R1-N, and the four relays are respectively connected to the A-phase wire, the B-phase wire, the C-phase wire, and the neutral wire N of the alternating-current portion of the inverter circuit. The second relay set R2 includes four relays, which are respectively the fifth relay R2-A, the sixth relay R2-B, the seventh relay R2-C, and the eighth relay R2-N, and the four relays are respectively connected to the four relays R1-A, R1-B, R1-C, and R1-N in the first relay set R1. The third relay set R3 includes four relays, which are respectively the ninth relay R3-A, the tenth relay R3-B, the eleventh relay R3-C, and the twelfth relay R3-N. Some terminals of the four relays are respectively connected to the four relays R2-A, R2-B, R2-C, and R2-N in the second relay set R2, and the remaining terminals of the four relays are respectively connected to A, B, C, and N phases of the power grid. The fourth relay set R4 includes three relays, which are respectively the thirteenth relay R4-A, the fourteenth relay R4-B, and the fifteenth relay R4-C. Some terminals of the three relays are respectively connected to A, B, and C phases in the first relay set R1, and the remaining terminals are respectively connected to A, B, and C phases of a three-phase load. The fifth relay set R-PE includes two relays (the sixteenth relay and the seventeenth relay) connected in series, and the second terminal of the fifth relay set R-PE is connected to R1-N in the first relay set R1 to form a PE wire.

The grid-connected and off-grid switching apparatus on an alternating-current side of a three-phase energy storage inverter disclosed in this application may have two operating modes: a grid-connected mode and an off-grid mode. The grid-connected mode may be subdivided into two modes. A mode 1 is a pure grid-connected mode, and a circuit thereof is shown in FIG. 5. A mode 2 is operating with a three-phase load in a grid-connected mode, and a circuit thereof is shown in FIG. 6. A mode 3 is pure off-grid mode, and a circuit thereof is shown in FIG. 7. The five relay sets may be separately controlled to be turned on and off by using a primary single chip microcomputer and a secondary single chip microcomputer. Specifically, four relay sets may be controlled to be turned on/off by using the primary single chip microcomputer, and one relay set is controlled to be turned on/off by using the secondary single chip microcomputer. In this way, a quantity of used relays is reduced, thereby greatly improving utilization of the relays and utilization of the single chip microcomputers. When the three-phase energy storage inverter operates in the mode 1, that is, the pure grid-connected mode, the relay sets R1, R2, and R3 are turned on and the relay sets R4 and R-PE are turned off because there is no load. A circuit diagram is shown in FIG. 5. The relay set R3 plays a role of isolating the three-phase energy storage inverter from the power grid. When the three-phase energy storage inverter operates in the mode 2, because the three-phase energy storage inverter needs to be grid-connected and operate with the load, the relay sets R1, R2, R3, R4, and R-PE are all turned on. A circuit diagram is shown in FIG. 6. Using the relay set R-PE enables the system to form a TN-S earthing manner. Because the protection wire and the neutral wire are separately disposed, a problem that a possibility of electric shock is increased because a device housing connected to the neutral wire is electrified due to disconnection of the neutral wire in a TN-C system is avoided, thereby greatly improving a safe and reliable operating capability of the entire system. When the three-phase energy storage inverter operates in the mode 3, that is, the pure off-grid mode, the relay sets R1, R4, and R-PE are turned on, and the relay sets R2 and R3 are turned off because there is no power grid. A circuit diagram is shown in FIG. 7.

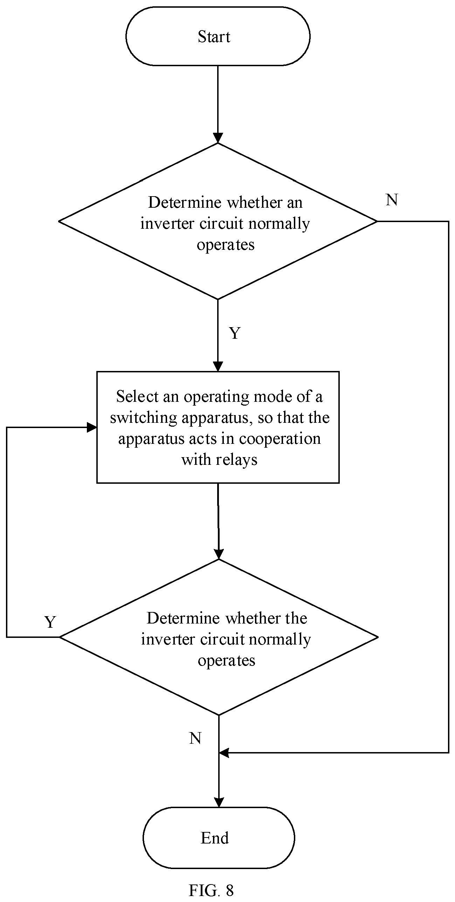

FIG. 8 is a flowchart of a control policy of a grid-connected and off-grid switching apparatus on an alternating-current side of a three-phase energy storage inverter according to an embodiment of this application.

As shown in FIG. 8, this application further discloses a control policy of a grid-connected and off-grid switching apparatus on an alternating-current side of a three-phase energy storage inverter. Specifically, a procedure of the control policy includes the following steps:
Step 1: Establish a grid-connected and off-grid switching apparatus on an alternating-current side of a three-phase energy storage inverter and a model thereof by using a system parameter given by an actual system.
Step 2: Determine whether the three-phase energy storage inverter operates normally and meets a grid-connected/off-grid operating condition.
Step 3: Select an operating mode of the switching apparatus, so that the apparatus acts in cooperation with relays.
Step 4: Determine again whether the three-phase energy storage inverter operates normally and meets the grid-connected/off-grid operating condition.
Step 5: Verify, with reference to different modes and by analyzing a specific embodiment, validity of the control policy of a grid-connected and off-grid switching apparatus on an alternating-current side of a three-phase energy storage inverter.

That is, before the operating mode of the grid-connected and off-grid switching apparatus on an alternating-current side of a three-phase energy storage inverter is switched, whether an inverter circuit normally operates is determined first. If the inverter circuit normally operates, the operating mode may be switched; otherwise, the procedure may be ended.

According to the control policy of a grid-connected and off-grid switching apparatus on an alternating-current side of a three-phase energy storage inverter disclosed in this application, a three-phase grid-connected/off-grid operating manner can be properly selected based on different operating conditions, and on/off of five relay sets can be flexibly used, thereby ensuring safe and stable operating of the system and improving utilization of the relays.

It should be noted that the grid-connected and off-grid switching apparatus on an alternating-current side of a three-phase energy storage inverter and the control policy thereof that are disclosed in this application are applicable to both a three-phase energy storage inverter and a single-phase energy storage inverter.

According to the grid-connected and off-grid switching apparatus on an alternating-current side of a three-phase energy storage inverter described in the embodiments of this application, the first relay set R1, the second relay set R2, the third relay set R3, the fourth relay set R4, and the fifth relay set R-PE are introduced between the inverter circuit, the power grid, the load, and an earth wire, and there is a specific connection manner between the relay sets, so that the three-phase energy storage inverter can safely and stably operate in a plurality of different grid-connected and off-grid modes, and a connection between the three-phase energy storage inverter and the power grid or the load can be flexibly cut off. Therefore, a grid-connected operating mode and an off-grid operating mode of the three-phase energy storage inverter are independent of each other. In addition, a relay set is added before grid-connection to isolate and protect the circuit in the three-phase energy storage inverter from the power grid. In addition, a relay set is introduced from the neutral wire and is connected to the earth wire, so that the neutral wire is separated from the protection wire, thereby greatly improving system safety. In addition, the five relay sets are separately controlled to be turned on and off by using the primary single chip microcomputer and the secondary single chip microcomputer, thereby reducing the quantity of used relays, and greatly improving utilization of the relays and utilization of the single chip microcomputers.

Finally, it should be noted that the grid-connected and off-grid switching apparatus on an alternating-current side of a three-phase energy storage inverter disclosed in the embodiments of this application is merely a preferred embodiment of this application and is merely used for describing a technical solution of this application, but is not used to limit this application. Although this application has been described in detail with reference to the foregoing embodiments, it should be understood by a person of ordinary skill in the art that the technical solutions described in the foregoing embodiments may still be modified, or some technical features thereof may be equivalently replaced. These modifications or replacements do not make the essence of the corresponding technical solutions depart from the spirit and scope of the technical solutions in the embodiments of this application.

## Claims

1. A grid-connected and off-grid switching apparatus on an alternating-current side of a three-phase energy storage inverter, **characterized in that** the apparatus comprises a first relay set, a second relay set, a third relay set, a fourth relay set, and a fifth relay set;
a first A-phase terminal, a first B-phase terminal, a first C-phase terminal, and a first neutral terminal of the first relay set are respectively configured to be connected to an A-phase terminal, a B-phase terminal, a C-phase terminal, and a neutral terminal of an inverter circuit;
a second A-phase terminal, a second B-phase terminal, a second C-phase terminal, and a second neutral terminal of the first relay set are respectively connected to a first A-phase terminal, a first B-phase terminal, a first C-phase terminal, and a first neutral terminal of the second relay set;
a second A-phase terminal, a second B-phase terminal, a second C-phase terminal, and a second neutral terminal of the second relay set are respectively connected to a first A-phase terminal, a first B-phase terminal, a first C-phase terminal, and a first neutral terminal of the third relay set;
a second A-phase terminal, a second B-phase terminal, a second C-phase terminal, and a second neutral terminal of the third relay set are respectively configured to be connected to an A-phase terminal, a B-phase terminal, a C-phase terminal, and a neutral terminal of a power grid;
the second A-phase terminal, the second B-phase terminal, and the second C-phase terminal of the first relay set are further respectively connected to a first A-phase terminal, a first B-phase terminal, and a first C-phase terminal of the fourth relay set, and a second A-phase terminal, a second B-phase terminal, and a second C-phase terminal of the fourth relay set are respectively configured to be connected to an A-phase terminal, a B-phase terminal, and a C-phase terminal of a load; and
the second neutral terminal of the first relay set is further connected to a first terminal of the fifth relay set, a second terminal of the fifth relay set serves as a PE terminal, and the second neutral terminal of the first relay set is further connected to a neutral terminal of the load.

2. The grid-connected and off-grid switching apparatus according to claim 1, **characterized in that** the first relay set comprises a first relay, a second relay, a third relay, and a fourth relay, first terminals of the first relay, the second relay, the third relay, and the fourth relay are respectively the first A-phase terminal, the first B-phase terminal, the first C-phase terminal, and the first neutral terminal of the first relay set, and second terminals of the first relay, the second relay, the third relay, and the fourth relay are respectively the second A-phase terminal, the second B-phase terminal, the second C-phase terminal, and the second neutral terminal of the first relay set.

3. The grid-connected and off-grid switching apparatus according to claim 1, **characterized in that** the second relay set comprises a fifth relay, a sixth relay, a seventh relay, and an eighth relay, first terminals of the fifth relay, the sixth relay, the seventh relay, and the eighth relay are respectively the first A-phase terminal, the first B-phase terminal, the first C-phase terminal, and the first neutral terminal of the second relay set, and second terminals of the fifth relay, the sixth relay, the seventh relay, and the eighth relay are respectively the second A-phase terminal, the second B-phase terminal, the second C-phase terminal, and the second neutral terminal of the second relay set.

4. The grid-connected and off-grid switching apparatus according to claim 1, **characterized in that** the third relay set comprises a ninth relay, a tenth relay, an eleventh relay, and a twelfth relay, first terminals of the ninth relay, the tenth relay, the eleventh relay, and the twelfth relay are respectively the first A-phase terminal, the first B-phase terminal, the first C-phase terminal, and the first neutral terminal of the third relay set, and second terminals of the ninth relay, the tenth relay, the eleventh relay, and the twelfth relay are respectively the second A-phase terminal, the second B-phase terminal, the second C-phase terminal, and the second neutral terminal of the third relay set.

5. The grid-connected and off-grid switching apparatus according to claim 1, **characterized in that** the fourth relay set comprises a thirteenth relay, a fourteenth relay, and a fifteenth relay, first terminals of the thirteenth relay, the fourteenth relay, and the fifteenth relay are respectively the first A-phase terminal, the first B-phase terminal, and the first C-phase terminal of the fourth relay set, and second terminals of the thirteenth relay, the fourteenth relay, and the fifteenth relay are respectively the second A-phase terminal, the second B-phase terminal, and the second C-phase terminal of the fourth relay set.

6. The grid-connected and off-grid switching apparatus according to claim 1, **characterized in that** the fifth relay set comprises a sixteenth relay and a seventeenth relay, a first terminal of the sixteenth relay is the first terminal of the fifth relay set, a second terminal of the sixteenth relay is connected to a first terminal of the seventeenth relay, and a second terminal of the seventeenth relay is the second terminal of the fifth relay set.

7. The grid-connected and off-grid switching apparatus according to any one of claims 1 to 6, **characterized in that** when the apparatus is in a pure grid-connected mode, the relays in the first relay set, the second relay set, and the third relay set are all turned on, and the relays in the fourth relay set and the fifth relay set are all turned off.

8. The grid-connected and off-grid switching apparatus according to any one of claims 1 to 6, **characterized in that** when the apparatus is in a grid-connected and on-load operating mode, the relays in the first relay set, the second relay set, the third relay set, the fourth relay set, and the fifth relay set are all turned on.

9. The grid-connected and off-grid switching apparatus according to any one of claims 1 to 6, **characterized in that** when the apparatus is in a pure off-grid mode, the relays in the first relay set are all turned off, and the relays in the second relay set, the third relay set, the fourth relay set, and the fifth relay set are all turned on.
